# EUROPEAN PATENT APPLICATION

(11) **EP 3 782 898 A1**
(43) Date of publication of application: **24.02.2021**
(21) Application number: 19192520.5
(22) Date of filing: 20.08.2019
(51) Int. Cl.: B63B 43/00, B63B 43/18, B63B 35/08, B63B 35/10, B63B 35/12, F03D 80/40

(54) **CONTROL SYSTEM FOR OPERATING A FLOATING WIND TURBINE UNDER SEA ICE CONDITIONS**

(71) Applicant: Siemens Gamesa Renewable Energy A/S, 7330 Brande (DK)
(72) Inventor: Esbensen, Thomas, 7400 Herning (DK); Laugesen, Kasper, 6700 Esbjerg (DK)
(74) Representative: Aspacher, Karl-Georg

(57) **Abstract**

It is described a control system (170) for operating a floating wind turbine (100, 200) under sea ice conditions. The control system (170) comprises a detection device (281, 282) configured for detecting a formation of ice (271, 272) in a critical zone (205) around the floating wind turbine, and an ice inhibiting device (291, 292, 293, 294) configured for manipulating the floating wind turbine (100, 200) in such a manner that the critical zone (205) is free of a threshold amount of the detected formation of ice (271, 272). Furthermore, a floating wind turbine (100, 200) is described which comprises a wind rotor comprising a wind rotor comprising a blade (140, 240), a tower (130, 230), a floating foundation (120, 220), and an above-described control system (170). Additionally, a method for operating a floating wind turbine (100, 200) under sea ice conditions is described.

## Description

### Field of invention

The present invention relates to a control system for operating a floating wind turbine under sea ice conditions. Further, the present invention relates to a floating wind turbine and a method for operating a floating wind turbine under sea ice conditions.

### Art Background

In the technical field of floating wind turbines, it is known how to install floating wind farms including a plurality of floating wind turbines. However, operation of today's floating wind turbines is limited to relatively warm clime. Particularly, today's floating wind turbines are not placed in arctic environment with a high density of sea ice or icebergs. Such harsh environment is a potential risk to destabilize or even damage the floating wind turbine. An effect of sea ice may be mechanical shocks and increased vibrations which may result in additional loads. At the same time atmospheric icing, due to water in the air, sea spray etc., could lead to ice formation on the floating wind turbines and substructures of the floating wind turbines, such as for example mooring lines or the tower.

To prevent the above-mentioned drawbacks, today's floating wind turbines are not placed in such harsh environmental conditions. However, due to a spread of floating offshore wind turbines, there may be a need for providing a control system, a floating wind turbine and a method which allow to place floating wind turbines and floating wind turbine farms in an arctic environment. Hence, there may be a need to operate floating wind turbines under sea ice conditions.

### Summary of the Invention

This need may be met by the subject matter according to the independent claims. Advantageous embodiments of the present invention are described by the dependent claims.

According to a first aspect of the invention there is provided a control system for operating a floating wind turbine under sea ice conditions. The control system comprises a detection device configured for detecting a formation of ice in a critical zone around the floating wind turbine, and an ice inhibiting device configured for manipulating the floating wind turbine in such a manner that the critical zone is free of a threshold amount of the detected formation of ice.

An amount of the detected formation of ice may denote in other words a quantity of the detected formation of ice.

A threshold amount of the detected formation of ice according to the present invention may be a quantity which may have according to its mass or extent a harmful effect on the floating wind turbine. For example, the threshold amount may be such that a damage may occur on a substructure of the floating wind turbine or that a substructure of the floating wind turbine may freeze.

A formation of ice having an amount not being harmful to any substructure of the floating wind turbine may rest in the critical zone. Therefore, not the entire formation of ice must have been for example melted or destroyed by a movement of the floating foundation.

According to an exemplary embodiment of the invention the ice inhibiting device is configured for manipulating the floating wind turbine in such a manner that the critical zone is free of the detected formation of ice.

The described control system is based on the idea that a control system comprises a device configured for detecting a potential risk from a formation of ice within a critical zone and a further device for then reacting to the detected risk by preventing a collision with the formation of ice or preventing an sea ice formation to build up around the floating wind turbine. Hence, the described control system is based on the idea that it is actively made use of a control system to prevent sea ice build-up and iceberg collision of floating wind turbines under sea ice conditions.

A floating wind turbine comprises a floating foundation which may move. By a movement of the floating foundation the floating wind turbine mounted on the floating foundation moves correspondingly. The motion of the floating foundation respectively the floating wind turbine may be divided into six individual degrees of freedom, namely three translations a surge, a sway and a heave, and three rotations a roll, a pitch and a yaw.

Due to similarities in naming between the pitch of the floating foundation and the pitch of the blades, a distinction is made in the following by distinguishing between the floater pitch and the blade pitch. On the one hand, the floater pitch denotes the pitch of the floating foundation around its point of rotation. On the other hand, the blade pitch denotes a controlled pitching of the blades of the floating wind turbine.

Under sea ice conditions according to an exemplary embodiment of the invention means that the floating wind turbine may be operated under harsh environmental conditions, particularly where a formation of ice in the sea water may naturally occur, such as for example in an arctic environment.

The critical zone according to an exemplary embodiment of the present invention may denote an area around the floating wind turbine which should be free of any formation of ice such that the floating wind turbine may be operated without the risk of a damage caused by a formation of ice in the critical zone. Hence, the critical zone should be as big as necessary to inhibit on the one hand a collision with the formation of ice and to inhibit one the other hand a harmful formation of ice on any substructure of the floating wind turbine. The size of the critical zone may also depend on external conditions such as for example temperature and humidity. When the temperature is low or the humidity is high, the critical zone should be larger because ice may form faster and the formation of ice may spread farer.

The described "being free of the detected formation of ice" of the critical zone may be provided if an amount of the detected formation of ice is lower than a threshold value. The threshold value may be a predefined threshold value or may be a threshold value adapted during the operation of the floating wind turbine. The threshold value may also be dynamically adapted for example due to a weather forecast.

If the amount of the detected formation of ice is under the threshold value, the amount may not be harmful for the floating wind turbine and the manipulation of the floating wind turbine may stop. Hence, the floating wind turbine may rest where it is.

Providing the described control system comprising the detection device and the ice inhibiting device may provide the advantage that a floating wind turbine may be operated under sea ice conditions and therefore under harsh environmental conditions.

According to an exemplary embodiment of the invention, the control system may be provided as an integrated assembly comprising the detection device and the ice inhibiting device and being provided at one location on the floating wind turbine, such as the nacelle, the tower or the floating foundation.

Alternatively, the control system according to a further exemplary embodiment of the invention may be provided as a plurality of sub-systems being each attached to different locations on the floating wind turbine. For example, the detection device being attached to the nacelle and the ice inhibiting device being attached to the mooring line.

According to an exemplary embodiment of the invention, the detection device comprises a vision-based detection device, particularly at least one of the group consisting of a camera, a light detection and ranging device, and a radio detection and ranging device.

Providing the detection device as a vision-based detection device may have the advantage that a formation of ice may easily be detected by a commonly known system. Additionally, any other obstacle being in the critical zone of the floating wind turbine may be detected at the same time. Hence, other obstacles may be taken into account during manipulating the floating wind turbine in such a manner that the critical zone is free of a threshold amount of the detected formation of ice. Therefore, a collision may less often occur.

Providing the vision-based detection device comprising a camera may have the advantage that an approved and known system may be used which is easy to handle.

Providing the vision-based detection device comprising a light detection and ranging device (LIDAR) may have the advantage that a detection of a formation of ice may be detected already when the formation of ice begins to form, i.e. it may be detected if a certain area of the critical zone still comprises only sea water or if small ice particles are already formed. Hence, the formation of ice may be detected at an early state. Therefore, the detection may be possible before the formation of ice may be visual for, for example a camera.

Providing the vision-based detection device comprising a radio detection and ranging device (RADAR) may have the advantage that by means of electromagnetic waves a ranging of a distance and an angle to the formation of ice may be obtained. Additionally, a relative movement between the floating wind turbine and the formation of ice may be possible.

According to an exemplary embodiment of the invention the detection device comprises a device configured for analysing a change in a dynamic of the floating wind turbine, particularly a change in the damped natural frequency of the floating wind turbine. The damped natural frequency may be changed due to a change in mass properties, a change in damping properties and a change in global stiffness properties.

Providing a device configured for analysing a change in a dynamics of the floating wind turbine may have the advantage that a formation of ice in the critical zone may be detected already when the formation of ice begins to form, because already the beginning of a formation of ice changes the dynamics of the floating wind turbine.

The change in the dynamical system in an exemplary embodiment may be a change in the damped natural frequency of the floating wind turbine due to a change in mass properties, a change in damping properties and a change in global stiffness properties. If sea ice forms around the floating foundation and in the critical zone, the movement of the floating wind turbine may slow down or may even be prevented in one or more of the six degrees of freedom. This slow or inhibited movement in one or more of the six degrees of freedom may be caused due to a change, particularly added mass and/or damping, of the natural frequency of the floating wind turbine.

According to a further embodiment of the invention, the detection device is configured for linking the formation of ice to a substructure of the floating wind turbine.

Linking the formation of ice to a substructure of the floating wind turbine may have the advantage that not only a formation of ice distanced from the floating wind turbine in the critical zone may be detected but also the formation of ice on the floating wind turbine may reliably be detected.

A substructure of the floating wind turbine according to an exemplary embodiment of the invention may be the floating foundation, one or more mooring lines, the tower, the nacelle and/or one or more of the blades.

According to a further exemplary embodiment, the detection device is configured for linking the formation of ice to more than one substructure. Therefore, an overall system status of the locations of the formations of ice may be obtained.

Linking the formation of ice to a substructure of the floating wind turbine may provide information of a location and/or an amount of the formation of ice as well as a location of a potential location where a formation of ice may occur. Therefore, the linking may provide an overall system status of the formation of ice on all or at least the most important substructures of the floating wind turbine.

According to a further exemplary embodiment of the invention, the detection device may also be a combination of the different above-defined detection devices. Therefore, the benefits of each of the different devices may be combined.

According to an exemplary embodiment of the present invention, the ice inhibiting device is configured for steering the floating wind turbine away from the formation of ice along a planned trajectory.

Steering the floating wind turbine away from the formation of ice may provide an effective way to prevent damages of the floating wind turbine caused by a collision of a substructure of the floating wind turbine and the formation of sea ice.

According to an exemplary embodiment of the invention, the planned trajectory may be planned by interactively taking into account data provided by the detection device. Hence, vision-based data and/or data related to a change in the dynamics of the floating wind turbine may be analysed by the ice inhibiting device.

At the same time the ice inhibiting device may be configured for steering away the floating wind turbine from the formation of sea ice may provide the possibility to move the floating wind turbine away from a potential risk due to the formation of sea ice.

According to an exemplary embodiment of the present invention, the ice inhibiting device comprises at least one of the group consisting of an underwater propeller, a mooring line actuator, and an automatous underwater vehicle.

An underwater propeller may provide a simple and cost-efficient means for steering the floating wind turbine. By providing more than one underwater propeller at the floating foundation, the floating wind turbine may be steered in the direction of the surge, the direction of the sway and the direction of the yaw. Additionally, if an underwater propeller is attached to the floating foundation in an inclined manner, a movement in the direction of the pitch and the direction of the roll may be possible.

A mooring line actuator may provide a possibility for the steering. One mooring line actuator attached to each of the mooring lines holding in place the floating wind turbine may provide a possibility to steer the floating wind turbine along each of or a combination of the surge, the sway, the heave, the roll, the pitch and the yaw.

An automatous underwater vehicle may provide a low-maintenance possibility for steering the floating wind turbine. Particularly, one autonomous underwater vehicle may be in charge of several floating wind turbines in one wind farm. Additionally, if more than one automatous underwater vehicle are provided, the floating wind turbine may be moved along each of or a combination of the surge, the sway, the heave, the roll, the pitch and the yaw.

According to a further embodiment of the invention, the ice inhibiting device melts the formation of the sea ice.

Melting the formation of ice may provide a critical zone free of any formation of sea ice without moving the floating wind turbine.

According to a further embodiment of the invention, the ice inhibiting device melts the formation of sea ice by heating a part of a substructure and/or a surrounding of the floating wind turbine.

A part of a substructure of the floating wind turbine may be a limited area of one of the substructures or a separate part fixed to the substructure having thermal characteristics which allow an easy and fast heating of the part.

By heating a part of a substructure of the floating wind turbine, a formation of ice on the substructure may be prevented before the formation of ice may have been formed. Due to weather forecasts or a measured temperature of the substructure, the substructure may be heated. Hence, the temperature of a substructure may be raised before the formation of ice may be formed on the substructure. Alternatively, the formation of ice may be melted when the formation is already formed on the substructure.

By heating a surrounding of the floating wind turbine, a formation of sea ice in the directly adjacent area of the sea may be prevented before the formation of sea ice may have been formed. Due to weather forecasts or a measured temperature of the adjacent area of the sea, the adjacent area of the sea may be heated. Hence, the temperature of the adjacent area of the sea may be raised before the formation of sea ice may be formed in the adjacent area of the sea. Alternatively, the formation of sea ice may be melted when the formation is already formed in the adjacent area of the sea.

According to an exemplary embodiment of the present invention, the ice inhibiting device comprises at least one of the group of an immersion heater and a thermoelectric generator.

Preventing the formation of ice or melting the formation of ice by the immersion heater may provide a well-known and widespread device which is energy efficient.

Preventing the formation of ice or melting the formation of ice by the thermoelectric generator may provide an easy setup device having an elongated operating life and technical reliability.

According to a further embodiment of the invention, the ice inhibiting device is configured for breaking the formation of sea ice.

Breaking the formation of sea ice may be provided by a movement of the floating wind turbine. Particularly, a movement of the floating foundation may cause a pitching of the floating foundation such that the formation of ice is comminuted by the floating foundation.

According to an exemplary embodiment of the invention, the floating foundation may comprise a reinforcement at positions where the floating foundation comes in contact with the formation of ice. Therefore, a structure of the floating foundation may be protected from damages.

According to a further embodiment of the invention, the ice inhibiting device is configured for manipulating the floating wind turbine by manipulating at least one of the group consisting of a pitch, a roll, a yaw, a surge, a sway and a heave of the floating wind turbine.

By manipulating more than one of the above-described six degrees of freedom at the same time, the floating wind turbine and the associated floating foundation may be precisely manoeuvred.

By manipulating one of the above-described degrees of freedom at one time, the reaction of the floating wind turbine may be waited for. If then the critical zone is already free of the formation of sea ice, a further manipulating may be unnecessary. Therefore, an efficient manipulating may be provided.

According to a further embodiment of the invention, the ice inhibiting device comprises at least one of the group of a floater pitch angle actuator, a mooring line actuator, a blade pitch actuator, and an automatous underwater vehicle.

A floater pitch angle actuator may be an actuator directly fixed to the floating foundation.

A blade pitch actuator may be used, which may already be part of the floating wind turbine. Hence, an already integrated part, particularly the blade pitch actuator, may be used to inhibit or at least reduce, a formation of sea ice.

According to an exemplary embodiment of the present application the floater pitch angle actuator may be an actuator manipulating the blade pitch of the floating wind turbine. By varying the blade pitch, a force of the wind acting on the blade and a force transmitted to the tower may be changed accordingly to each other. Therefore, the floating wind turbine may move and the floater pitch may change accordingly. Hence, the floater pitch angle may be indirectly adapted by an actuator being already used and built-in in the wind turbine.

A mooring line actuator may provide a possibility for fine-tuning of the pitching and hence the breaking. One mooring line actuator attached to each of the mooring lines holding in place the floating wind turbine may be moved along each of or a combination of the surge, the sway, the heave, the roll, the pitch and the yaw.

An automatous underwater vehicle may provide an easy maintenance possibility for fine-tuning of the pitching and hence the breaking. Particularly, one autonomous underwater vehicle may be in charge of several floating wind turbines in one wind farm. Additionally, if more than one automatous underwater vehicles are provided, the floating wind turbine may be moved along each of or a combination of the surge, the sway, the heave, the roll, the pitch and the yaw.

According to a further exemplary embodiment of the invention, the ice inhibiting device may also be a combination of the different above-defined ice inhibiting devices. Therefore, the benefits of each of the different devices may be combined. For example, a formation of sea ice may first be heated by a first ice inhibiting device and then the formation of sea ice may be broken up by a movement of the floating foundation. Alternatively, or additionally, the formation of sea ice may first be heated up by melting and then the floating wind turbine may be steered away from the smaller formation of sea ice by a further ice inhibiting device.

According to a further aspect of the invention there is provided a floating wind turbine. The floating wind turbine comprises (a) a wind rotor comprising a blade, (b) a tower, (c) a floater, and (d) an above-described control system.

Also, the described system is based on the idea that a floating wind turbine comprises a detection device configured for detecting a potential risk from a formation of ice and an ice inhibiting device configured for then reacting to the detected risk by preventing a collision with the formation of ice. Hence, the described floating wind turbine is based on the idea that it is actively made use of a control system to prevent sea ice and iceberg collision of floating wind turbines under sea ice conditions.

According to a further aspect of the invention there is provided a method for operating a floating wind turbine under sea ice conditions. The method comprises detecting a formation of sea ice in a critical zone around the floating wind turbine and manipulating the floating wind turbine in such a manner that the critical zone is free of a threshold amount of the detected formation of ice.

Also, the described method is based on the idea that detecting a potential risk from a formation of ice is followed by reacting to the detected risk and preventing a collision with the formation of ice. Hence, the described method is based on the idea that it is actively made use of a control system to prevent sea ice and iceberg collision of floating wind turbines under sea ice conditions.

In the following some exemplary ideas of the present invention are described. A floating wind turbine may provide a large movement in the three directions of translation and in the three directions of rotation. This may be used to actively move the floating wind turbine free from a potential thread, as for example a formation of ice or an iceberg. This may either be by actively steering the floating wind turbine away for the formation of ice or by pitching back and forth with the floating foundation of the floating wind turbine to break up the formation of ice. A blade pitch, a generator torque or propellers on the floating foundation may be used to actively steering the floating wind turbine in one of the floating wind turbine's degrees of freedom. An indication of a high density of formation of ice near the floating foundation may be done with an optical system, e.g. cameras, attached to the floating wind turbine or by utilizing a system identification to capture a change in the overall system behaviour of the floating wind turbine. Additionally, the change may be linked to a high sea ice activity, i.e. a high amount of formation of ice. Furthermore, immersion heaters may be used to melt the formation of ice around the floating wind turbine or thermoelectric modules may be attached to e.g. mooring lines, to prevent a building up of ice on the substructures of the floating wind turbine or on the floating wind turbine itself.

A first exemplary approach for operating a floating wind turbine under sea ice conditions may comprise the following steps. A formation of ice or icebergs are located via a vision-based method, such as a camera, a LIDAR or a RADAR attached to the floating foundation of the floating wind turbine. Subsequently, a trajectory to steer the floating wind turbine away from the potential risk, i.e. the formation of ice, may be planned. Again, vision-based information may be used to define options and obstacles that may be used to estimate the best given trajectory. Then, the floating wind turbine may be moved along the planned trajectory. For moving the floating wind turbine different actuators may be utilized to manoeuvre the floating wind turbine.

Electric underwater propellers on the floating foundation may be used to manoeuvre the floating wind turbine along the surge and the sway. If only a small displacement may be needed, line actuators on mooring lines may be utilized to either move the floating wind turbine in the direction of the pitch or in the direction of the roll such that the formation of ice may pass by the floating wind turbine. Further, with a controlled yaw misalignment, the trust force may be used to actively steer the floating wind turbine away from a potential danger, i.e. the formation of ice. Automatous underwater vehicles may be used to tow the floating wind turbine away from the potential danger, i.e. the formation of ice. The automatous underwater vehicles may be docked in specific places at the wind farm such that whenever an automatous underwater vehicle is needed, it may manoeuvre to a specific floating wind turbine.

A second exemplary approach for operating a floating wind turbine under sea ice conditions may comprise the following steps. Utilizing system identification to identify that a formation of ice is building up around the floating wind turbine due to changes in the dynamical system in terms of for instance a damped natural frequency of the floating wind turbine that would change due to changed mass properties, stiffness properties and damping properties in all of the degrees of freedom of the floating wind turbine. Subsequently, exciting the pitch angle of the floating foundation for breaking the formation of ice into smaller pieces of ice and for preventing a new formation of ice. Exciting the pitch angle of the floating foundation may be done by utilizing the blade pitching.

A third exemplary approach for operating a floating wind turbine under sea ice conditions may comprise the following steps. Utilizing a system identification to identify that a formation of ice is building up on the floating wind turbine or a substructure of the floating wind turbine due to changes in the dynamical system in terms of for instance a damped natural frequency of the floating wind turbine that may change due to changed mass properties, stiffness properties and damping properties in each of the degrees of freedom of the floating wind turbine. Subsequently, linking the change to a specific substructure and utilizing an immersion heater, a thermoelectric generator etc. for melting the formation of ice. Alternatively, if the risk of a formation of ice is high, e.g. based on a temperature of a substructure of the floating wind turbine, preventing the formation of ice by utilizing an immersion heater, a thermoelectric generator etc.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a floating wind turbine according to an exemplary embodiment of the present invention.
- Figure 2: shows a floating wind turbine according to a further exemplary embodiment of the present invention.

### Detailed Description

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

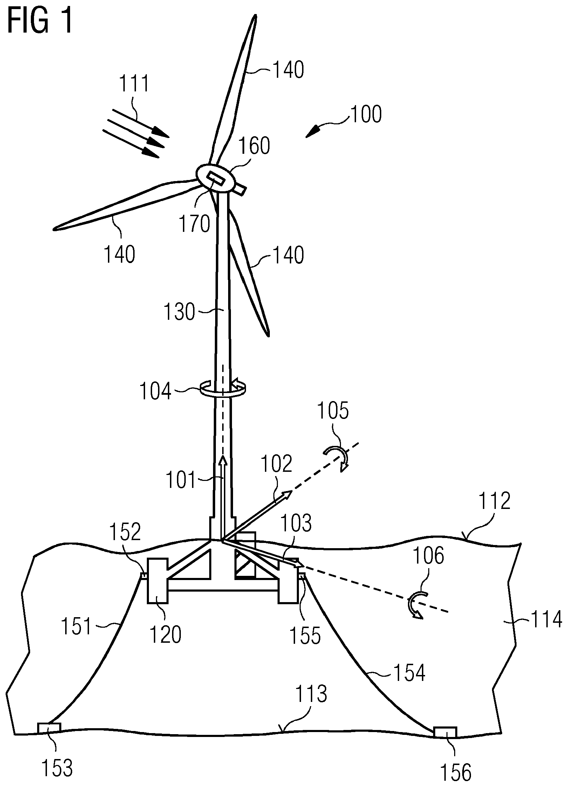

Figure 1 shows a floating wind turbine 100 according to an exemplary embodiment of the present invention. The floating wind turbine 100 comprises three blades 140 attached to a hub forming a rotor mounted to a nacelle 160, a tower 130 and a floating foundation 120. The floating wind turbine 100 further comprises a plurality of mooring lines. Only a first mooring line 151 and a second mooring line 154 are shown in Figure 1 for clarity reasons. The first mooring line 151 is fixed to the floating foundation 120 by a first mooring line fixation 152 and to a sea ground 113 by a second mooring line fixation 153. Further, the second mooring line 154 is fixed to the floating foundation 120 by a further first mooring line fixation 155 and to a sea ground 113 by a further second mooring line fixation 156.

The floating foundation 120 is fixed by the first mooring line 151 and the second mooring line 152 in such a manner that the floating foundation 120 is dunked in sea water 114 under a sea surface 112. Therefore, the floating foundation 120 is held under water by the mooring lines and/or the floating wind turbine's self-weight. A wind 111 acts on the three blades 140 of the rotor of the floating wind turbine 100 such that electrical energy may be generated by the floating wind turbine 100.

The floating wind turbine 100 floats in the sea water 114 and is held in position by the mooring lines, exemplarily illustrated by the first mooring line 151 and the second mooring line 154 in Figure 1. Therefore, the floating wind turbine 100 has six individual degrees of freedom in which the floating wind turbine 100 may move. Namely, three translations a surge 103, a sway 102 and a heave 101, and three rotations a roll 106, a pitch 105 and a yaw 104.

Fixed to the nacelle 160 is a control system 170 which is a one-piece integrated control system 170. The control system 170 is shown schematically in Figure 1 and is located in the nacelle 160.

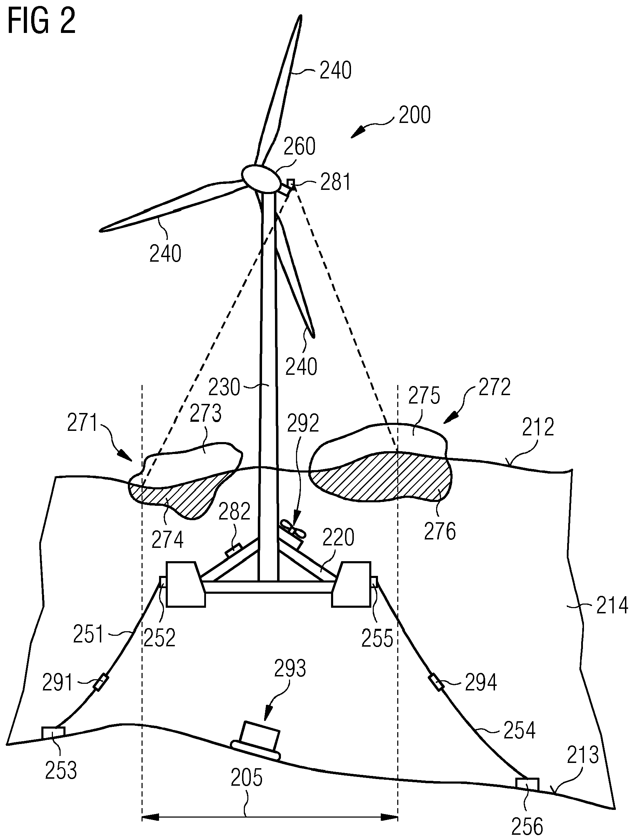

Figure 2 shows a floating wind turbine 200 according to a further exemplary embodiment of the present invention.

The floating wind turbine 200 comprises a floating foundation 220, a tower 230 mounted to the floating foundation 220, three blades 240 attached to a hub and mounted to a nacelle 260. The nacelle 260 is mounted to the tower 230 at the opposite end with respect to the floating foundation 220. The floating wind turbine 200 further comprises a plurality of mooring lines. Only a first mooring line 251 and a second mooring line 254 are shown in Figure 2 for clarity reasons. The first mooring line 251 is fixed to the floating foundation 220 by a first mooring line fixation 252 and to a sea ground 213 by a second mooring line fixation 253. Further, the second mooring line 254 is fixed to the floating foundation 220 by a further first mooring line fixation 255 and to a sea ground 213 by a further second mooring line fixation 256.

The floating foundation 220 is fixed by the plurality of mooring lines, exemplarily illustrated as the first mooring line 251 and the second mooring line 252 in Figure 2, in such a manner that the floating foundation 220 is dunked into the sea water 214 under a sea surface 212. A first formation of ice 271 and a second formation of ice 272 are each at least partially in a critical zone 205. The first formation of ice 271 and the second formation of ice 272 may for example each be an iceberg. The first formation of ice 271 comprises a first part 273 being located above the sea surface 212 and a second part 274 being located under the sea surface 212. Accordingly, the second formation of ice 272 comprises a further first part 275 being located above the sea surface 212 and a further second part 274 being located under the sea surface 212.

A detection device 281, particularly a vision-based detection device 281, particularly a camera 281, is mounted to the nacelle 260. The vision-based detection device 281 detects the first part 273 and the further first part 275 located above the sea surface 212 and being in the critical zone 205.

Additionally, a detection device 282, particularly a device 282 configured for analysing a change in a dynamic of the floating wind turbine 200, is mounted to the floating foundation 220. The detection device 282 may detect the second part 274 of the first formation of ice 271 and the further second part 276 of the second formation of ice 272 in the critical zone 205.

A first mooring line actuator 291 is mounted to the first mooring line 251 and a second mooring line actuator 294 is mounted to the second mooring line 294. As may be seen from Figure 2 compared to Figure 1, the floating foundation 220 is pulled deeper into the sea water 214 and hence farer away from the sea surface 212 and nearer to the sea ground 213 as compared to the floating foundation 120 shown in Figure 1. The floating foundation 220 is moved along the heave 101 (shown in Figure 1). However, it may be understood that the floating foundation 220 may also additionally or alternatively be moved in surge 103 and/or sway 102. Therefore, a collision with the first formation of ice 271 and the second formation of ice 272 is inhibited.

Further, an ice inhibiting device 292, particularly an underwater propeller 292 is mounted to the floating foundation 220. The underwater propeller 292 may support a movement of the floating foundation 220 and hence of the floating wind turbine 200.

A further ice inhibiting device 293, particularly an autonomous underwater vehicle 293, is shown on the sea ground 213.

As may be seen in Figure 2, the control system is formed as a multi-piece control system comprising the vision-based detection device 281, the device 282 configured for analysing a change in a dynamics of the floating wind turbine 200, the first mooring line actuator 291, the second mooring line actuator 292, the underwater propeller 292 and the autonomous underwater vehicle 293.

It should be noted that the term "comprising" does not exclude other elements or steps and the use of articles "a" or "an" does not exclude a plurality. Also, elements described in association with different embodiments may be combined. It should also be noted that reference signs in the claims should not be construed as limiting the scope of the claims.

## Claims

1. Control system (170) for operating a floating wind turbine (100, 200) under sea ice conditions, the control system (170) comprising
a detection device (281, 282) configured for detecting a formation of ice (271, 272) in a critical zone (205) around the floating wind turbine (100, 200),
an ice inhibiting device (291, 292, 293, 294) configured for manipulating the floating wind turbine (100, 200) in such a manner that the critical zone (205) is free of a threshold amount of the detected formation of ice (271, 272).

2. The control system (170) according to claim 1,
wherein the detection device (281, 282) comprises a vision-based detection device (281), particularly at least one of the group consisting of a camera, a light detection and ranging device, and a radio detection and ranging device.

3. The control system (170) according to claim 1 or 2,
wherein the detection device (281, 282) comprises a device (282) configured for analysing a change in a dynamics of the floating wind turbine (100, 200), particularly a change in a damped natural frequency of the floating wind turbine (100, 200) caused by a change in at least one of the group consisting of a change in a mass property, a change in a damping property and a stiffness property.

4. The control system (170) according to any one of the claims 1 to 3,
wherein the detection device (281, 282) is configured for linking the formation of ice (271, 272) to a substructure (120, 220, 130, 230, 140, 240) of the floating wind turbine (100, 200).

5. The control system (170) according to any one of the claims 1 to 4,
wherein the ice inhibiting device (291, 292, 293, 294) is configured for steering the floating wind turbine (100, 200) away from the formation of ice (271, 272) along a planned trajectory.

6. The control system (170) according to any one of the claims 1 to 5,
wherein the ice inhibiting device (291, 292, 293, 294) comprises at least one of the group consisting of an underwater propeller (292), a mooring line actuator (291, 294), and an automatous underwater vehicle (293).

7. The control system (170) according to any one of the claims 1 to 6,
wherein the ice inhibiting device (291, 292, 293, 294) melts the formation of ice (271, 272).

8. The control system (170) according to claim 7,
wherein the ice inhibiting device (291, 292, 293, 294) melts the formation of ice (271, 272) by heating a part of a substructure (120, 220, 130, 230, 140, 240) and/or a surrounding of the floating wind turbine (100, 200).

9. The control system (170) according to any one of the claims 1 to 8,
wherein the ice inhibiting device (291, 292, 293, 294) comprises at least one of the group of an immersion heater and a thermoelectric generator.

10. The control system (170) according to any one of the claims 1 to 9,
wherein the ice inhibiting device (291, 292, 293, 294) is configured for breaking the formation of ice (271, 272).

11. The control system (170) according to any one of the claims 1 to 10,
wherein the ice inhibiting device (291, 292, 293, 294) is configured for manipulating the floating wind turbine (100, 200) by manipulating at least one of the group consisting of a pitch (105), a roll (106), a yaw (104), a surge (103), a sway (102), and a heave (101) of the floating wind turbine (100, 200).

12. The control system (170) according to claim 11,
wherein the ice inhibiting device (291, 292, 293, 294) comprises at least one of the group of a floater pitch angle actuator, a mooring line actuator (291, 294), an automatous underwater vehicle (293), and a blade pitch actuator.

13. Floating wind turbine (100, 200) comprising
a wind rotor comprising a blade (140, 240),
a tower (130, 230),
a floating foundation (120, 220), and
a control system (170) according to any one of the claims 1 to 12.

14. Method for operating a floating wind turbine (100, 200) under sea ice conditions, the method comprising
detecting a formation of ice (271, 272) in a critical zone (205) around the floating wind turbine (100, 200),
manipulating the floating wind turbine (100, 200) in such a manner that the critical zone (205) is free of a threshold amount of the detected formation of ice (271, 272).
